# EUROPÄISCHE PATENTSCHRIFT

(11) **EP 3 895 406 B1**
(45) Veröffentlichungstag und Bekanntmachung des Hinweises auf die Patenterteilung: **19.10.2022**
(21) Anmeldenummer: 19813440.5
(22) Anmeldetag: 26.11.2019
(51) Int. Cl.: H04W 12/08, H04W 12/00, H04L 9/40, H04W 12/71

(54) **VERFAHREN ZUM BETREIBEN EINES DATENNETZWERKS EINES KRAFTFAHRZEUGS UND KRAFTFAHRZEUG MIT EINEM ENTSPRECHEND BETREIBBAREN DATENNETZWERK**
METHOD FOR OPERATING A DATA NETWORK OF A MOTOR VEHICLE AND MOTOR VEHICLE COMPRISING A DATA NETWORK WHICH CAN BE CORRESPONDINGLY OPERATED
PROCÉDÉ D'EXPLOITATION D'UN RÉSEAU DE DONNÉES D'UN VÉHICULE AUTOMOBILE ET VÉHICULE AUTOMOBILE AYANT UN RÉSEAU DE DONNÉES EXPLOITABLE CORRESPONDANT

(30) Priorität: 14.12.2018 DE 102018221742
(43) Veröffentlichungstag der Anmeldung: 20.10.2021
(73) Patentinhaber: VOLKSWAGEN AKTIENGESELLSCHAFT, 38440 Wolfsburg (DE)
(72) Erfinder: JURTHE, Sascha, 45529 Hattingen (DE); GRUMMEL, Thomas, 31188 Holle (DE); BOSSE, Stefan, 31188 Holle (DE)
(86) Internationale Anmeldenummer: PCT/EP2019/082573
(87) Internationale Veröffentlichungsnummer: WO 2020/120126

(56) Entgegenhaltungen:
- WO-A1-2017/058925
- DE-A1-102017 202 022
- US-A1- 2012 135 683
- US-A1- 2014 306 826

## Beschreibung

Die Erfindung betrifft ein Verfahren zum Betreiben eines Datennetzwerks eines Kraftfahrzeugs. Ein solchen Datennetzwerk kann beispielsweise auf der Grundlage des IP (Internet Protokoll) realisiert sein. An das Datennetzwerk kann zumindest ein fahrzeugfremdes mobiles Endgerät, zum Beispiel ein Smartphone oder ein Tablet-PC, angebunden oder integriert werden. Zu der Erfindung gehört auch ein Kraftfahrzeug, das ein Datennetzwerk aufweist, welches gemäß dem Verfahren betrieben werden kann.

In einem Fahrzeug kann ein Internetzugang für ein mobiles Endgerät breitgestellt werden. Hierzu kann in dem Datennetzwerk für den Betrieb einer Internetverbindung ein Internetroutingdienst bereitgestellt werden, der beispielsweise auf der Grundlage eines im Kraftfahrzeug verbauten Mobilfunkmodems die Internetverbindung zwischen einem lokalen Datennetzwerk des Kraftfahrzeugs und dem Internet bereitstellen kann.

Um ein mobiles Endgerät mit diesem Datennetzwerk zu verbinden, kann eine Funkschnittstelle vorgesehen sein, die beispielsweise als so genannter WLAN-Access Point (WLAN - wireless local area network) realisiert sein kann. Vorteilig für ein mobiles Endgerät bei der dann möglichen Internetnutzung über das fahrzeuginterne oder fahrzeugeigene Mobilfunkmodem ist, dass dieses eine schnellere oder stabilere Internetverbindung anbieten kann als wenn ein Benutzer direkt mit seinem mobilen Endgerät direkt eine Internetverbindung in das Internet aufbaut. Auch kann ein mobiles Endgerät mit dem Internet verbunden sein und gleichzeitig zumindest einen lokalen oder fahrzeugeigenen Datendienst des Datennetzwerks des Kraftfahrzeugs nutzen. Ein Beispiel für einen solchen fahrzeugeigenen oder fahrzeuginternen Datendienst ist das so genannte Rear-Seat-Entertainment, das heißt die Wiedergabe von Medieninhalten auf einem Rücksitz oder einer Rückbank des Kraftfahrzeugs.

Nachteilig bei einem Datennetzwerk mit einer Internetverbindung, das heißt einem Internetroutingdienst, ist bei einem Kraftfahrzeug heute allerdings, dass die Datenübertragung von Internetdaten volumenbasiert abgerechnet wird, sodass eine unkontrollierte Datenübertragung durch ein nicht überwachtes mobiles Endgerät zu Unkosten oder zu einer Erschöpfung eines Datenvolumens führen kann.

Von WLAN-Routern für Gebäude ist bekannt, dass diese die WLAN-Funkschnittstelle für einzelne mobile Endgeräte sperren können. In einem Kraftfahrzeug würde dies aber zu dem unerwünschten Nebeneffekt führen, dass mittels des mobilen Endgeräts dann auch kein fahrzeuginterner Datendienst für dieses mobile Endgerät mehr verfügbar wäre. Die komplett Sperrung des WLAN-Zugriffs ist daher unerwünscht, da ein Benutzer eines Kraftfahrzeugs mit einem mobilen Endgerät stets die Möglichkeit haben sollte, einen lokalen oder fahrzeuginternen Datendienst über eine Funkschnittstelle in Anspruch zu nehmen. Nur eine Kontrolle des Internetzugangs aus dem fahrzeugeigenen Datennetzwerk heraus ist von Interesse.

Im professionellen Umfeld ist bekannt, eine Internetnutzung für einzelne Nutzer individuell zu sperren, wofür individuelle Authentifizierungsdaten beispielsweise auf der Basis des Standards 802.1x ausgewertet werden. Dies erfordert aber aufgrund der Komplexität einer solchen Überwachung einen unerwünscht hohen Administrationsaufwand.

Aus der US 9,607,449 B1 ist ein Datennetzwerk der beschriebenen Art bekannt. In dem bekannten Datennetzwerk wird die Kommunikation mobiler Endgeräte zu allen anderen Geräten überwacht, was die Kontrolle der Kommunikationskanäle ressourcenintensiv macht. Aus der US 2018/0034919 A1 ist bekannt, ein mobiles Endgeräte über eine WLAN-Funkschnittelle in ein Datennetzwerk eines Kraftfahrzeugs einzubinden.

Aus der WO 2007/020185 A1 ist ein Router bekannt, welcher den individuellen Zugang von mobilen Endgeräten in das Internet kontrollieren kann. DE102017202022A1 offenbart ein Verfahren zum Betreiben eines Datennetzwerks eines Kraftfahrzeugs.

Der Erfindung liegt die Aufgabe zugrunde, ein Datennetzwerk in einem Kraftfahrzeug zu betreiben und hierbei die Verfügbarkeit zumindest eines fahrzeuginternen Datendienstes für zumindest ein mobiles Endgerät sicherzustellen und gleichzeitig eine Kontrolle über die Internetnutzung zu bewahren.

Die Aufgabe wird durch die Gegenstände der unabhängigen Patentansprüche gelöst. Vorteilhafte Ausführungsformen der Erfindung sind durch die abhängigen Patentansprüche, die folgende Beschreibung sowie die Figuren beschrieben.

Durch die Erfindung ist ein Verfahren zum Betreiben eines Datennetzwerks eines Kraftfahrzeugs bereitgestellt. Das Verfahren geht davon aus, dass das Datennetzwerk durch zumindest ein fahrzeugfremdes mobiles Endgerät genutzt wird. Ein solches mobiles Endgerät kann beispielsweise ein Smartphone oder ein Tablet-PC oder eine Smartwatch sein. In dem Datennetzwerk wird ein Internetroutingdienst für eine Datenübertragung von Internetdaten zwischen dem Datennetzwerk einerseits und dem fahrzeugexternen Internet andererseits betrieben. Durch den Internetroutingdienst wird also eine Internetverbindung bereitgestellt, über welche Internetdaten aus dem Datennetzwerk in das Internet und/oder aus dem Internet in das Datennetzwerk übertragen werden können. Somit kann ein mobiles Endgerät, das an das Datennetzwerk angebunden oder mit dem Datennetzwerk verbunden ist, also Internetdaten mit dem Internet austauschen. Zusätzlich wird in dem Datennetzwerk zumindest ein von dem Internetroutingdienst verschiedener lokaler oder fahrzeuginterner Datendienst betrieben. In der beschriebenen Weise kann es sich bei einem solchen fahrzeuginternen Datendienst beispielsweise um eine Medienwiedergabe handeln. Für die besagte Anbindung des zumindest einen mobilen Endgeräts an das Datennetzwerk wird eine Funkschnittstelle betrieben. Beispielsweise kann die Funkschnittstelle durch ein WLAN-Netzwerk bereitgestellt werden. Dann handelt es sich also um eine WLAN-Funkschnittstelle.

Somit kann also mit einem mobilen Endgerät über die Funkschnittstelle auf das Datennetzwerk zugegriffen werden und dort der zumindest eine fahrzeuginterne Datendienst genutzt werden. Zudem ist von dem Datennetzwerk aus auch der Internetroutingdienst erreichbar. Nun gilt es, die Kontrolle über den Internetroutingdienst dahingehend bereitzustellen, dass der Zugriff des zumindest einen mobilen Endgeräts auf den Internetroutingdienst kontrolliert oder gezielt freigeschaltet oder gesperrt wird.

Hierzu ist gemäß dem Verfahren vorgesehen, dass durch oder über die besagte Funkschnittstelle jeweilige Identifikationsdaten des zumindest einen mobilen Endgeräts erfasst werden. Die Identifikationsdaten identifizieren eindeutig das mobile Endgerät. Durch eine Bedieneinrichtung des Kraftfahrzeugs wird auf der Grundlage der Identifikationsdaten zu dem zumindest einen mobilen Endgerät ein jeweiliges Auswahlelement angezeigt. Beispielsweise kann eine Liste angezeigt werden, in welcher jedes an der Funkschnittstelle erkannte oder detektierte mobile Endgerät aufgelistet ist, sodass jeder Listeneintrag als ein Auswahlelement fungieren kann. Jedes mobile Endgerät, dessen zugehöriges Auswahlelement dann an der Bedieneinrichtung durch eine Benutzereingabe ausgewählt wird, beispielsweise angeklickt wird, wird registriert. Mit "registrieren" ist hierbei gemeint, dass erfasst oder gespeichert wird, dass das jeweilige mobile Endgerät ausgewählt wurde.

Jedes registrierte mobile Endgerät wird dann in einer Sperrfunktion des Internetroutingdienstes eingetragen. Der Internetroutingdienst ist also dazu eingerichtet, die Datenübertragung der Internetdaten zu filtern oder dahingehend zu kontrollieren, dass nur bei einer Freigabe oder Akzeptanz durch eine Sperrfunktion die Datenübertragung für ein bestimmtes mobiles Endgerät durchgeführt wird. Die Sperrfunktion sperrt also den Internetdienst für jedes eingetragene mobile Endgerät und gibt ihn für jedes übrige mobile Endgerät frei. Somit kann also nur jedes nicht in der Sperrfunktion eingetragene mobile Endgerät die Internetverbindung nutzen, das heißt den Internetroutingdienst für die Datenübertragung von Internetdaten verwenden oder anfordern. Der Internetroutingdienst ist also standardmäßig freigegeben und wird nur für jedes ausgewählte mobile Endgerät gesperrt. Alternativ dazu kann umgekehrt vorgesehen sein, dass die Sperrfunktion den Internetroutingdienst nur für jedes eingetragene mobile Endgerät freigibt. Mit anderen Worten wird dann durch das Auswählen des jeweiligen Auswahlelements durch die Benutzereingabe aktiv ausgewählt, welches mobile Endgerät den Internetroutingdienst nutzen darf. Der Internetroutingdienst ist also standardmäßig gesperrt und wird nur für jedes ausgewählte mobile Endgerät freigegeben. Im ersteren Fall (standardmäßige Freigabe) ist der Internetroutingdienst also für jedes mobile Endgerät nutzbar, es sei denn, durch eine Benutzereingabe wählt ein Benutzer ein mobiles Endgerät aus, für welches dann der Internetroutingdienst gesperrt wird. Im zweiten Fall (standardmäßige Sperrung) ist sichergestellt, dass kein mobiles Endgerät den Internetroutingdienst nutzen kann, es sei denn, es wird durch eine Benutzereingabe ausgewählt. Dies stellt sicher, dass nicht versehentlich ein mobiles Endgerät den Internetroutingdienst nutzt, nur weil es übersehen wurde.

Durch die Erfindung ergibt sich der Vorteil, dass dem zumindest einen mobilen Endgerät das Datennetzwerk und damit der darin verfügbare zumindest eine fahrzeuginterne Datendienst jedem mobilen Endgerät zur Verfügung steht und ein Benutzer mittels seiner Benutzereingabe getrennt von dem fahrzeuginternen Datendienst durch Auswahl eines jeweiligen Auswahlelements festlegen kann, welches mobile Endgerät zusätzlich den Internetroutingdienst nutzen darf, für welches mobile Endgerät also der Internetroutingdienst freigeschaltet sein soll. Somit kann der Internetroutingdienst separat individuell für jedes mobile Endgerät kontrolliert oder eingestellt werden, ohne dass hierdurch die Nutzung des zumindest einen fahrzeuginternen Datendienstes beeinträchtigt wird.

In der Erfindung umfassen die jeweiligen Identifikationsdaten des zumindest einen mobilen Endgeräts eine jeweilige MAC-Adresse (MAC - media access control) des jeweiligen mobilen Endgeräts. Die MAC-Adresse ist fest mit einer Hardware des mobilen Endgeräts gekoppelt oder verbunden oder in dieser Hardware eingetragen. Daher ist durch Nutzung der MAC-Adresse eine Umgehung der Sperrfunktion verhindert.

In der Erfindung ist vorgesehen, dass der zumindest eine fahrzeuginterne Datendienst unabhängig von dem Internetroutingdienst für das zumindest eine mobile Endgeräte freigegeben ist. Mit anderen Worten beeinflusst oder beeinträchtigt also das Eintragen eines mobilen Endgeräts in die Sperrfunktion des Internetroutingdienstes die Nutzung des zumindest einen fahrzeuginternen Datendienstes durch das zumindest eine mobile Endgerät nicht.

Zu der Erfindung gehören auch Ausführungsformen, durch die sich zusätzliche Vorteile ergeben.

In einer Ausführungsform bleibt jedes in der Sperrfunktion eingetragene mobile Endgerät auch über einen Neustart des Kraftfahrzeugs hinweg eingetragen. Mit anderen Worten geht also die Auswahl, die ein Benutzer durch seine Benutzereingabe an der Bedieneinrichtung trifft, nicht verloren, wenn das Kraftfahrzeug ausgeschaltet wird. Somit ist sichergestellt, dass auch über einen Neustart des Kraftfahrzeugs hinweg eine unerwünschte Internetnutzung unterbleibt.

In einer Ausführungsform bleibt in der Sperrfunktion jedes eingetragene mobile Endgerät solange eingetragen, bis an der Bedieneinrichtung die Auswahl des zu dem jeweiligen eingetragenen mobilen Endgerät gehörigen Auswahlelements durch eine weitere Benutzereingabe aufgehoben wird. Dann wird die Eintragung in der Sperrfunktion gelöscht. Somit wird also die Eintragung nur gelöscht, wenn ein Benutzer mittels einer weiteren Benutzereingabe bewusst die Auswahl eines jeweiligen mobilen Endgeräts wieder aufhebt. Hierdurch wird eine versehentliche Freischaltung oder Freigabe des Internetroutingdienstes verhindert.

In einer Ausführungsform wird die Sperrfunktion mittels einer Firewall realisiert, durch welche hindurch die Datenübertragung der Internetdaten durchgeführt wird. Eine Firewall kann beispielsweise auf der Grundlage einer Filterung oder Blockierung von Datenpaketen mit einer vorgegebenen IP-Adresse durchgeführt werden, wobei hierbei jeweils die IP-Adresse jedes in der Sperrfunktion eingetragenen mobilen Endgeräts gesperrt oder blockiert wird. Zusätzlich oder alternativ dazu kann eine Filterung auf der Grundlage der jeweiligen MAC-Adresse jedes in der Sperrfunktion eingetragenen mobilen Endgeräts durchgeführt werden.

In Bezug auf den zumindest einen fahrzeuginternen Datendienst ist gemäß einer Ausführungsform vorgesehen, dass der zumindest eine fahrzeuginterne Datendienst einen Streamingdienst für Mediendaten (zum Beispiel Audio und/oder Video) und/oder eine Datenübertragung zwischen zumindest zwei mobilen Endgeräten (zum Beispiel Kameradaten für Babyfon-Funktionalität) und/oder ein Datenaustausch zumindest einer Datei und/oder eine Fernbedienung zumindest einer Fahrzeugfunktion des Kraftfahrzeugs durch ein mobiles Endgerät umfasst. Solche Datendienste können innerhalb des Kraftfahrzeugs ohne Nutzung des Internetroutingdienstes, das heißt ohne Kostenverursachung bereitgestellt werden.

Um den Internetroutingdienst bereitzustellen, ist gemäß einer Ausführungsform vorgesehen, dass hierzu ein Mobilfunkmodem betrieben wird. Ein solches Mobilfunkmodem kann eine Mobilfunkverbindung zu einem Mobilfunknetzwerk bereitstellen, über welches dann eine Internetverbindung bereitgestellt oder betrieben werden kann.

Zu der Erfindung gehört auch ein Kraftfahrzeug mit dem beschriebenen Datennetzwerk. Das Kraftfahrzeug ist hierbei dazu eingerichtet, das Datennetzwerk gemäß einer Ausführungsform des erfindungsgemäßen Verfahrens zu betreiben. Hierzu kann beispielsweise ein Steuergerät vorgesehen sein, welches die beschriebenen Verfahrensschritte ausführen kann. Hierbei kann als die besagte Bedieneinrichtung beispielsweise eine Mensch-Maschine-Schnittstelle, beispielsweise ein Touchscreen und/oder zumindest eine Taste vorgesehen sein. Die Benutzereingabe kann beispielsweise auf der Grundlage eines Infotainmentsystems des Kraftfahrzeugs realisiert sein. Der zumindest eine fahrzeuginterne Datendienst kann durch zumindest ein Steuergerät des Kraftfahrzeugs realisiert oder bereitgestellt sein. Das Datennetzwerk kann innerhalb eines einzelnen Steuergeräts vorgesehen sein oder einen Verbund aus mehreren Steuergeräten umfassen.

Die Erfindung umfasst auch die Kombinationen der Merkmale der beschriebenen Ausführungsformen.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs;
- Fig. 2: eine schematische Darstellung einer Bedieneinrichtung des Kraftfahrzeugs von Fig. 1 während eines Auswahlvorgangs, bei welchem durch eine Benutzereingabe ein Auswahlelement ausgewählt wird; und
- Fig. 3: eine schematische Darstellung einer Eintragung zumindest eines mobilen Endgeräts in eine Sperrfunktion eines Internetroutingdienstes, wobei die Eintragung in Abhängigkeit von der Auswahl, wie sie gemäß Fig. 2 beschrieben ist, erfolgen kann.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

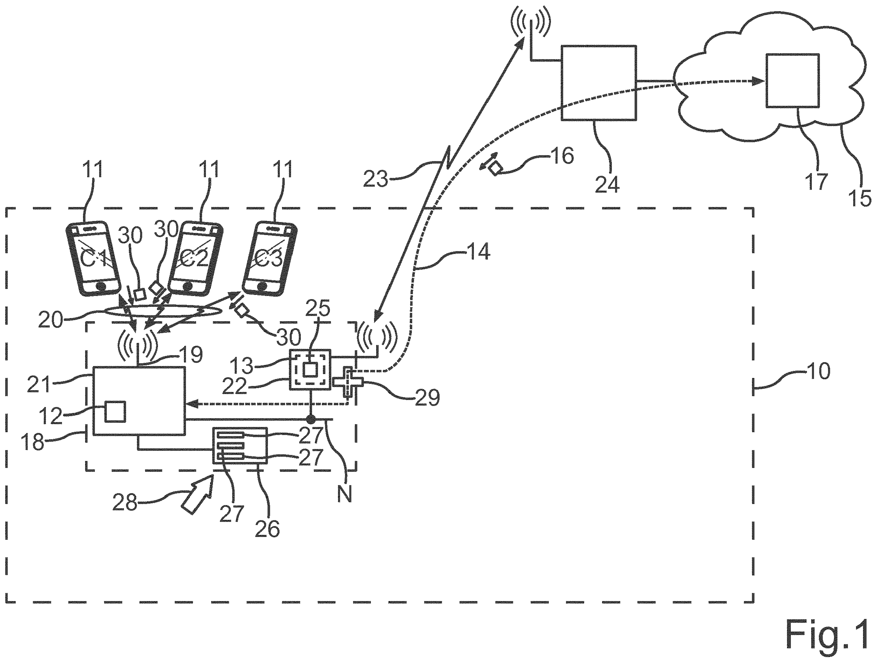

Fig. 1 zeigt ein Kraftfahrzeug 10, bei dem es sich um einen Kraftwagen, insbesondere einen Personenkraftwagen oder Lastkraftwagen, oder um einen Personenbus handeln kann. In dem Kraftfahrzeug 10 kann es ermöglicht sein, das zumindest ein Insasse des Kraftfahrzeugs 10 bei der Nutzung von zumindest einem mobilen Endgerät 11 unterstützt wird. Als mobiles Endgerät 11 kann jeweils beispielsweise ein Smartphone oder ein Tablet-PC oder eine Smartwatch vorgesehen sein, um nur Beispiele zu nennen. Das jeweilige mobile Endgerät 11 kann hierbei durch das Kraftfahrzeug 10 unterstützt werden, indem zumindest ein fahrzeuginterner Datendienst 12 bereitgestellt wird, beispielsweise ein Streamingdienst für Mediendaten und/oder eine Datenübertragung zwischen zwei mobilen Endgeräten 11 und/oder das Fernbedienen oder kabellose Bedienen zumindest einer Fahrzeugfunktion des Kraftfahrzeugs 10 durch das jeweilige mobile Endgerät 11. Des Weiteren kann in dem Kraftfahrzeug 10 ein Internetroutingdienst 13 bereitgestellt sein, durch welchen eine Internetverbindung 14 zum Internet 15 bereitgestellt sein kann, sodass Internetdaten 16 zwischen einem jeweiligen mobilen Endgerät 11 einerseits und dem Internet 15 andererseits, beispielsweise ein Server 17 des Internets, über den Internetroutingdienst 13 ausgetauscht oder übertragen werden können.

Zum Bereitstellen des zumindest einen fahrzeuginternen Datendienstes 12 und des Internetroutingdienstes 13 kann in dem Kraftfahrzeug 10 ein Datennetzwerk 18 bereitgestellt sein, an welches das zumindest eine mobile Endgerät 11 über eine Funkschnittstelle 19 mittels einer jeweiligen Funkverbindung 20 angekoppelt oder angebunden werden kann. Die Funkschnittstelle 19 kann beispielsweise auf der Grundlage einer WLAN-Technologie realisiert sein. Die Funkschnittstelle 19 kann beispielsweise durch ein Steuergerät 21 als so genannter Hot-Spot für das Kraftfahrzeug 10 bereitgestellt sein.

Der Internetroutingdienst 13 für die Internetverbindung 14 kann durch dasselbe Steuergerät 21 oder, wie in Fig. 1 gezeigt, durch ein anderes Steuergerät 22 bereitgestellt sein. Zum Bereitstellen der Internetverbindung 14 kann eine Funkverbindung 23 zu einem Mobilfunknetzwerk 24 durch beispielsweise ein Mobilfunkmodem des Datennetzwerks 18 aufgebaut oder betrieben werden, das sich beispielsweise in dem Steuergerät 22 befinden kann.

Für den Betrieb des Datennetzwerks 18 kann allerdings vorgesehen sein, dass ein Benutzer eine mobiles Endgerät 11 oder mehrere mobile Endgeräte 11 daran hindern möchte oder davon abhalten möchte, den Internetroutingdienst 13 zu nutzen. Dabei soll aber weiterhin die Nutzung des zumindest einen fahrzeuginternen Datendienstes 12 durch das jeweilige mobile Endgerät 11 möglich sein.

Hierzu kann der Internetroutingdienst 13 eine Sperrfunktion 25 aufweisen. Zum Konfigurieren der Sperrfunktion 25, also zum Eintragen eines solchen mobilen Endgeräts, für welches die Internetverbindung 14 entweder bereitgestellt oder blockiert werden soll, kann eine Bedieneinrichtung 26 bereitgestellt sein, die beispielsweise einen Touchscreen zum Anzeigen zumindest eines Auswahlelements 27 und zum Empfangen einer Benutzereingabe 28 aufweisen kann. Die Bedieneinrichtung 26 kann z.B. auf einem Infotainmentsystem des Kraftfahrzeugs 10 basieren. Wählt ein Benutzer mittels der Benutzereingabe 28 ein Auswahlelement 27 aus, so kann ein dem ausgewählten Auswahlelement 27 zugeordnetes mobiles Endgerät 11 beispielsweise für eine Sperrung oder Freigabe der Internetverbindung registriert werden. Im Folgenden sei angenommen, dass eine Auswahl eine Sperrung bewirken kann. Es kann dann in der Sperrfunktion 25 jedes registrierte mobile Endgerät 11 eingetragen oder gelistet werden. Dann kann eine Blockade oder Sperrung 29 des Internetroutingdienstes 13 für dieses eingetragene mobile Endgerät 11 durch die Sperrfunktion 25 durchgeführt werden.

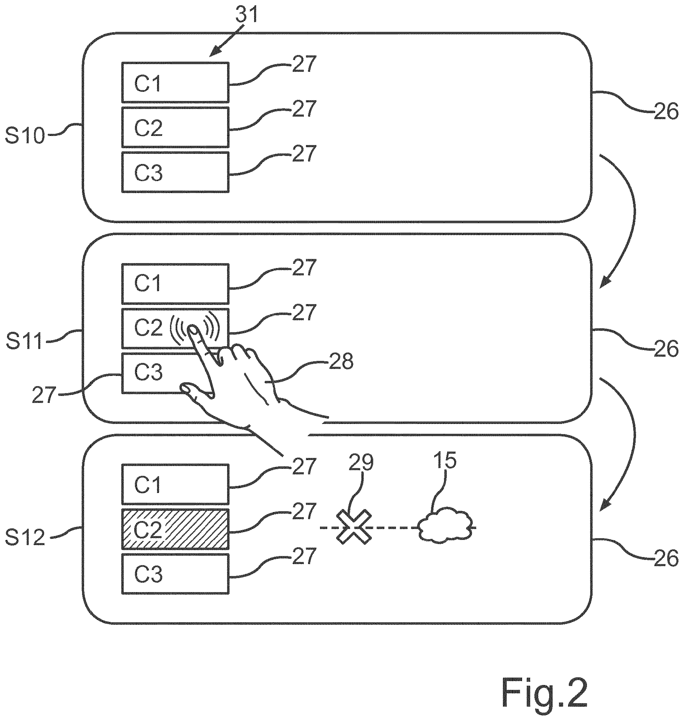

Fig. 2 zeigt noch einmal, wie das Datennetzwerk 18 des Kraftfahrzeugs 10 betrieben werden kann, um für ein einzelnes mobiles Endgerät 11 gezielt den Internetroutingdienst 13 zu blockieren oder zu sperren.

In einem Schritt S10 können durch die Funkschnittstelle 19 (siehe Fig. 1) jeweilige Identifikationsdaten 30 des jeweiligen mobilen Endgeräts 11 erfasst werden. Auf Grundlage der Identifikationsdaten 30 kann durch die Bedieneinrichtung 26 eine Liste 31 des verfügbaren mobilen Endgeräte 11 bereitgestellt werden. In Fig. 1 und Fig. 2 sind die mobilen Endgeräte 11 durch eine jeweilige individuelle Identitätsangabe oder Bezeichnung C1, C2, C3 voneinander unterschieden. Die Liste 31 kann beispielsweise aus den Auswahlelementen 27 gebildet sein, durch welche jeweils eines der mobilen Endgeräte 11 identifiziert oder kenntlich gemacht ist. Beispielsweise kann jedes mobile Endgerät 11 als Teilnehmer oder Client bezeichnet sein.

In einem Schritt S11 kann jedes mobile Endgerät 11, dessen zugehöriges Auswahlelement 27 an der Bedieneinrichtung 26 durch die Benutzereingabe 28 ausgewählt wird, für eine Sperrung registriert werden. Ein Benutzer kann beispielsweise das zugehörige Auswahlelement 27 anklicken oder antippen, wenn die Bedieneinrichtung 26 die Auswahlelemente 27 auf einem Touchscreen anzeigt. Im Falle von Fig. 2 ist dies das mobile Endgerät 11 mit der Bezeichnung C2.

In einem Schritt S12 kann dann jedes registrierte mobile Endgerät 11 in der Sperrfunktion 25 des Internetroutingdienstes 13 eingetragen werden, wodurch die Sperrfunktion 25 dann den Internetroutingdienst 13 für dieses jeweilige eingetragene mobile Endgerät sperrt. Dem Nutzer kann auf der Bedieneinrichtung 26 symbolisiert werden, für welches Endgerät 11 aktuell die Sperrung 29 der Internetverbindung 14 zum Internet 15 aktiv ist. Der Benutzer weiß dann, welches Auswahlelement 27 er noch einmal auswählen oder antippen muss, um die Sperrung 29 für dieses mobile Endgerät 11 wieder aufzuheben oder zu deaktivieren. Die Sperrung 29 kann auch über eine Abschaltung des Kraftfahrzeugs 10 hinweg aufrechterhalten oder gespeichert werden.

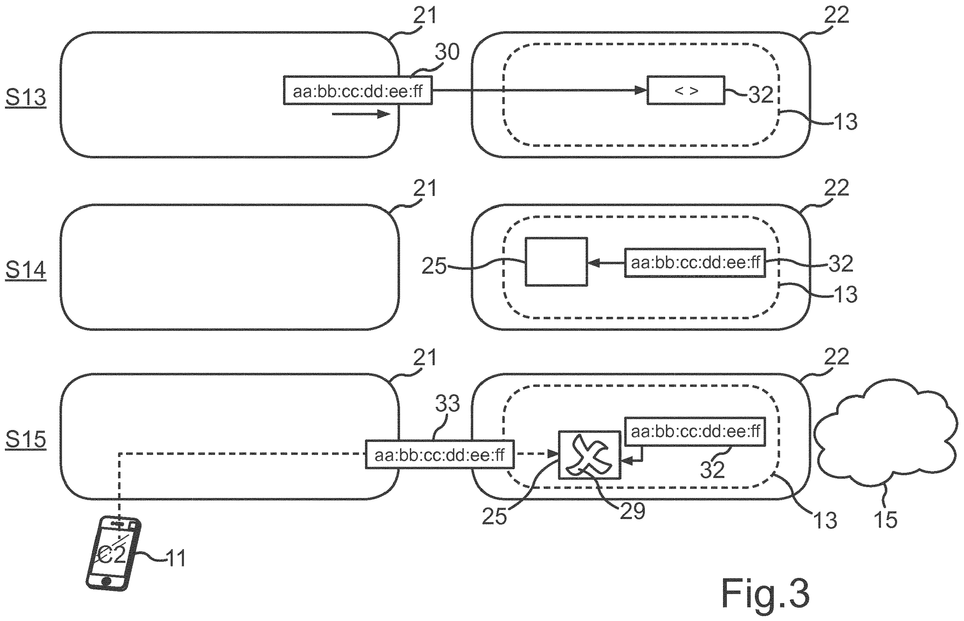

Fig. 3 veranschaulicht den Schritt S12 noch einmal detailliert in mehrere Schritte unterteilt.

In einem Schritt S13 kann jedes registrierte Endgerät 11, das durch den Benutzer für die Sperrung 29 ausgewählt wurde, bei der Variante mit zwei Steuergeräten 21, 22 dem Steuergerät 22 mit dem Internetroutingdienst 13 gemeldet oder signalisiert werden. Hierzu können die Identifikationsdaten 30 des registrierten Endgeräts 11, im Beispiel also des Endgeräts mit der Bezeichnung C2, signalisiert werden. Die Steuergeräte 21, 22 können hierzu über eine Netzwerkverbindung N gekoppelt sein. Die Netzwerkverbindung N kann beispielsweise auf der Grundlage eines Netzwerkkabels (beispielsweise eines Ethernet-Kabels) und/oder eine Funkverbindung gekoppelt sein.

In dem Internetroutingdienst 13 kann eine Liste 32 vorgesehen sein, in welcher all diejenigen mobilen Endgeräte 11 aufgelistet oder eingetragen sind, für die die Sperrung 29 des Internetroutingdienstes gültig sein soll. Werden nun in dem Schritt S13 die Internetdaten 16 für mobiles Endgerät 11, beispielsweise das Endgerät mit der Bezeichnung C2, signalisiert, so kann in einem Schritt S14 das registrierte mobile Endgerät 11 in die Liste 32 eingetragen werden. Hierdurch wird die Sperrfunktion 25 dahingehend konfiguriert, dass der Internetroutingdienst 13 für dieses eingetragene mobile Endgerät 11 gesperrt ist. In einem Schritt S15 wird entsprechend für den Fall, dass ein solches eingetragenes mobiles Endgerät 11 (hier mit der Bezeichnung C2) ein Datenpaket 33, welches mit seinen Identifikationsdaten gekennzeichnet ist, beispielsweise mit der MAC-Adresse, in das Internet 15 aussenden möchte, durch die Sperrfunktion 25 erkannt, dass es sich um ein Datenpaket 33 eines mobilen Endgeräts 11 handelt, für welches der Internetroutingdienst 13 gesperrt ist.

In der Liste 32 kann ein mobiles Endgerät 11 solange eingetragen bleiben, bis der Benutzer die Auswahl des mobilen Endgeräts 11 aufhebt, was im Zusammenhang mit Fig. 2 bereits beschrieben wurde.

Im Folgenden ist noch einmal eine besonders bevorzugte Ausführungsform beschrieben.

Das Kraftfahrzeug 10 bietet somit dem Nutzer die Möglichkeit, sich alle Clients oder Endgeräte 11 anzeigen zu lassen, die zum WLAN-Netzwerk des Kraftfahrzeugs 10 verbundenen sind (z.B. auf dem Bildschirm des Infotainmentsystems, d.h. eines HMI). Aus dieser Liste kann der Nutzer dann ein oder mehrere verbundene Endgeräte 11 für WLAN auswählen, denen er das Routing ins Internet 15 nicht erlauben möchte. Diese werden Anhand ihrer MAC-Adresse identifiziert und das Datennetzwerk blockiert das Routing ins Internet für die Clients oder Endgeräte 11 mit den entsprechenden MAC-Adressen.

Wesentliches Merkmal dieser Ausführungsform ist der Umstand, dass nicht der komplette Zugriff auf das WLAN-Netzwerk gesperrt wird, sondern nur das Routing ins Internet und somit das Anbieten von lokalen Datendiensten (z.B. Rear Seat Entertainment) weiterhin möglich bleibt.

Auf dem HMI des Infotainmentsystems werden die derzeit verbundenen Endgeräte 11 für WLAN angezeigt. Der Nutzer oder die Nutzerin wählt das zu sperrende WLAN-Endgerät aus.

In der Applikationssoftware des Infotainment-Systems wird die zu dem WLAN-Endgerät gehörige MAC-Adresse ermittelt und an die Networking-Software des Internetroutingdienstes als "zu sperren" gemeldet. In der Networking-Software werden (z.B. im Rahmen einer Firewall) alle Pakete, die von dieser MAC-Adresse an Adressen außerhalb des lokalen Netzes geroutet werden sollen, verworfen.

Als Besonderheit ist hervorzuheben, dass die Applikations-Software für fahrzeuginterne Datendienste und Networking-Software nicht zwingend im gleichen Steuergerät untergebracht sein müssen. Die Nutzerinteraktion und der zu erzielende Effekt werden also möglicherweise durch unterschiedliche Steuergeräte erbracht.

Es ist nicht zwingend erforderlich, dass die Steuergeräte für Benutzer-Interaktion und tatsächlichem Effekt (Sperren eines Clients) in getrennten Steuergeräten implementiert sind. Beides wäre auch in einem Steuergerät implementierbar.

Neuerung und damit Vorteil gegenüber bekannten Lösungen ist, dass nur ein Teilaspekt (das Routing ins Internet) der Kommunikation eines WLAN Clients gesperrt werden kann, die lokale Kommunikation aber nicht betroffen ist. Auch kommt das System ohne eine komplizierte Rollen- und Rechtevergabe (wie es z.B. bei einer 802.1x Authentifizierung nötig wäre) aus.

Insgesamt zeigt das Beispiel, wie durch die Erfindung ein Verfahren zum Sperren eines Internetzugangs für WLAN-Clients in einem Kraftfahrzeug bereitgestellt werden kann. Entsprechend wird dieses Datenpaket 33 durch die Sperrung 29 blockiert, beispielsweise gelöscht oder verworfen.

Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

Alle hierin erwähnten Beispiele wie auch bedingte Formulierungen sind ohne Einschränkung auf solche speziell angeführten Beispiele zu verstehen.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Die vorgeschlagenen Ausführungsformen des Verfahrens und der Vorrichtung können als eine Kombination von Hardware und Software implementiert werden. Die Software kann als ein Anwendungsprogramm auf einer Programmspeichervorrichtung installiert werden. Typischerweise handelt es sich um eine Maschine auf Basis einer Computerplattform die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf solch einer Computerplattform wird typischerweise außerdem ein Betriebssystem installiert. Die verschiedenen Prozesse und Funktionen, die hier beschrieben wurden, können Teil des Anwendungsprogramms sein, oder ein Teil der über das Betriebssystem ausgeführt wird.

### Bezugszeichenliste

- 10: Kraftfahrzeug
- 11: mobiles Endgerät
- 12: Datendienst
- 13: Internetroutingdienst
- 14: Internetverbindung
- 15: Internet
- 16: Internetdaten
- 17: Server
- 18: Datennetzwerk
- 19: Funkschnittstelle
- 20: Fahrzeugfunktion
- 21: Steuergerät
- 22: Steuergerät
- 23: Funkverbindung
- 24: Mobilfunknetzwerk
- 25: Sperrfunktion
- 26: Bedieneinrichtung
- 27: Auswahlelement
- 28: Benutzereingabe
- 29: Sperrung
- 30: Identifikationsdaten
- 31: Liste
- 32: Liste
- 33: Datenpaket
- C1-3: Identitätsangabe
- N: Netzwerkverbindung

## Patentansprüche

1. Verfahren zum Betreiben eines Datennetzwerks (18) eines Kraftfahrzeugs (10), wobei das Datennetzwerk (18) durch zumindest ein fahrzeugfremdes mobiles Endgerät (11) genutzt wird und in dem Datennetzwerk (18) einerseits ein Internetroutingdienst (13) für eine Datenübertragung von Internetdaten (16) zwischen dem Datennetzwerk (18) und dem fahrzeugexternen Internet (15) und andererseits zumindest ein von dem Internetroutingdienst (13) verschiedener fahrzeuginterner Datendienst (12) betrieben wird und für eine Anbindung des zumindest einen mobilen Endgeräts (11) an das Datennetzwerk (18) eine Funkschnittstelle (19) betrieben wird,
**dadurch gekennzeichnet, dass**
durch die Funkschnittstelle (19) jeweilige Identifikationsdaten (30) des zumindest einen mobilen Endgeräts (11) erfasst werden, wobei die jeweiligen Identifikationsdaten (30) des zumindest einen mobilen Endgeräts (11) eine jeweilige MAC-Adresse des jeweiligen mobilen Endgeräts (11) umfassen, und
durch eine Bedieneinrichtung (26) des Kraftfahrzeugs (10) auf der Grundlage der Identifikationsdaten (30) zu dem zumindest einen mobilen Endgerät (11) ein jeweiliges Auswahlelement (27) angezeigt und jedes mobile Endgerät (11), dessen zugehöriges Auswahlelement (27) an der Bedieneinrichtung (26) durch eine Benutzereingabe (28) ausgewählt wird, registriert wird, und
jedes registrierte mobile Endgerät (11) in einer Sperrfunktion (25) des Internetroutingdienstes (13) eingetragen wird, wobei die Sperrfunktion (25) den Internetroutingdienst (13) für jedes eingetragene mobile Endgerät (11) sperrt und für jedes übrige mobile Endgerät (11) freigibt oder wobei die Sperrfunktion (25) den Internetroutingdienst (13) nur für jedes eingetragene mobile Endgerät (11) freigibt, wobei der zumindest eine fahrzeuginterne Datendienst (12) unabhängig von dem Internetroutingdienst (13) für das zumindest eine mobile Endgeräte (11) freigegeben ist

2. Verfahren nach Anspruch 1, wobei jedes in der Sperrfunktion (25) eingetragene mobile Endgerät (11) auch über einen Neustart des Kraftfahrzeugs (10) hinweg eingetragen bleibt.

3. Verfahren nach einem der vorhergehenden Ansprüche, wobei in der Sperrfunktion (25) jedes eingetragene mobile Endgerät (11) solange eingetragen bleibt, bis an der Bedieneinrichtung (26) die Auswahl des zu dem jeweiligen eingetragenen mobilen Endgerät (11) gehörigen Auswahlelements (27) durch eine weitere Benutzereingabe (28) aufgehoben wird, und dann die Eintragung in der Sperrfunktion (25) gelöscht wird.

4. Verfahren nach einem der vorhergehenden Ansprüche, wobei die Sperrfunktion (25) mittels einer Firewall, durch welche hindurch die Datenübertragung der Internetdaten (16) durchgeführt ist, realisiert wird.

5. Verfahren nach einem der vorhergehenden Ansprüche, wobei der zumindest eine fahrzeuginterne Datendienst (12) einen Streamingdienst für Mediendaten und/oder eine Datenübertragung zwischen zumindest zwei mobilen Endgeräten (11) und/oder eine Fernbedienung zumindest einer Fahrzeugfunktion (20) durch ein mobiles Endgerät (11) umfasst.

6. Verfahren nach einem der vorhergehenden Ansprüche, wobei die Funkschnittstelle (19) durch ein WLAN-Netzwerk bereitgestellt wird.

7. Verfahren nach einem der vorhergehenden Ansprüche, wobei der Internetroutingdienst (13) mittels eines Mobilfunkmodems bereitgestellt wird.

8. Verfahren nach einem der vorhergehenden Ansprüche, wobei in dem Internetroutingdienst (13) eine Liste (32) vorgesehen ist, in welcher diejenigen mobilen Endgeräte (11) aufgelistet sind, für die die Sperrung (29) des Internetroutingdienstes gültig sein soll, und für den Fall, dass ein solches eingetragenes mobiles Endgerät (11) ein Datenpaket (33), welches mit der MAC-Adresse gekennzeichnet ist, in das Internet (15) aussenden möchte, durch die Sperrfunktion (25) erkannt wird, dass es sich um ein Datenpaket (33) eines mobilen Endgeräts (11) handelt, für welches der Internetroutingdienst (13) gesperrt ist.

9. Kraftfahrzeug (10) mit einem Datennetzwerk (18), wobei das Kraftfahrzeug (10) dazu eingerichtet ist, das Datennetzwerk (18) gemäß einem Verfahren nach einem der vorhergehenden Ansprüche zu betreiben.

## Claims

1. Method for operating a data network (18) of a motor vehicle (10), wherein the data network (18) is used by way of at least one vehicle-extraneous mobile terminal (11), and firstly an Internet routing service (13) for data transmission of Internet data (16) between the data network (18) and the vehicle-external Internet (15) and secondly at least one vehicle-internal data service (12), which is different from the Internet routing service (13), are operated in the data network (18), and a radio interface (19) is operated for the purpose of connecting the at least one mobile terminal (11) to the data network (18),
**characterized in that**
the radio interface (19) is used to acquire respective identification data (30) of the at least one mobile terminal (11), the respective identification data (30) of the at least one mobile terminal (11) comprising a respective MAC address of the respective mobile terminal (11), and
an operator control device (26) of the motor vehicle (10) is used to display a respective selection element (27) for the at least one mobile terminal (11) on the basis of the identification data (30), and each mobile terminal (11) whose associated selection element (27) on the operator control device (26) is selected by way of a user input (28) is logged, and
each logged mobile terminal (11) is registered in a disabling function (25) of the Internet routing service (13), the disabling function (25) disabling the Internet routing service (13) for each registered mobile terminal (11) and enabling it for each other mobile terminal (11), or the disabling function (25) only enabling the Internet routing service (13) for each registered mobile terminal (11), the at least one vehicle-internal data service (12) being enabled for the at least one mobile terminal (11) independently of the Internet routing service (13).

2. Method according to Claim 1, wherein each mobile terminal (11) registered in the disabling function (25) remains registered even in spite of the motor vehicle (10) being restarted.

3. Method according to either of the preceding claims, wherein each registered mobile terminal (11) remains registered in the disabling function (25) until the selection of the selection element (27) belonging to the respective registered mobile terminal (11) is cancelled on the operator control device (26) by way of a further user input (28), and then the registration in the disabling function (25) is cleared.

4. Method according to one of the preceding claims, wherein the disabling function (25) is provided by means of a firewall through which the data transmission of the Internet data (16) is performed.

5. Method according to one of the preceding claims, wherein the at least one vehicle-internal data service (12) comprises a streaming service for media data and/or data transmission between at least two mobile terminals (11) and/or remote control of at least one vehicle function (20) by way of a mobile terminal (11).

6. Method according to one of the preceding claims, wherein the radio interface (19) is provided by way of a WLAN network.

7. Method according to one of the preceding claims, wherein the Internet routing service (13) is provided by means of a mobile radio modem.

8. Method according to one of the preceding claims, wherein there is provision in the Internet routing service (13) for a list (32) that lists those mobile terminals (11) for which the disablement (29) of the Internet routing service is supposed to be valid, and if such a registered mobile terminal (11) wishes to send a data packet (33), identified by the MAC address, to the Internet (15), the disabling function (25) detects that this is a data packet (33) from a mobile terminal (11) for which the Internet routing service (13) is disabled.

9. Motor vehicle (10) having a data network (18), wherein the motor vehicle (10) is designed to operate the data network (18) using a method according to one of the preceding claims.

## Revendications

1. Procédé pour faire fonctionner un réseau de données (18) d'un véhicule automobile (10), le réseau de données (18) étant utilisé par au moins un terminal mobile (11) externe au véhicule et un service de routage Internet (13) pour une transmission de données de données Internet (16) entre le réseau de données (18) et l'Internet externe au véhicule (15) d'une part et au moins un service de données (12) interne au véhicule, différent du service de routage Internet (13), d'autre part étant exploités dans le réseau de données (18) et une interface radioélectrique (19) étant exploitée pour une connexion de l'au moins un terminal mobile (11) au réseau de données (18),
**caractérisé en ce que**
des données d'identification (30) respectives de l'au moins un terminal mobile (11) sont acquises par l'interface radioélectrique (19), les données d'identification (30) respectives de l'au moins un terminal mobile (11) comprenant une adresse MAC respective du terminal mobile (11) respectif, et
un élément de sélection (27) respectif est affiché par un dispositif de commande (26) du véhicule automobile (10) sur la base des données d'identification (30) de l'au moins un terminal mobile (11) et chaque terminal mobile (11) dont l'élément de sélection (27) associé est sélectionné par une saisie d'utilisateur (28) au niveau du dispositif de commande (26) est sélectionné est enregistré, et
chaque terminal mobile (11) enregistré est inscrit dans une fonction de blocage (25) du service de routage Internet (13), la fonction de blocage (25) bloquant le service de routage Internet (13) pour chaque terminal mobile (11) inscrit et la libérant pour chaque autre terminal mobile (11) ou la fonction de blocage (25) ne libérant le service de routage Internet (13) que pour chaque terminal mobile (11) inscrit, l'au moins un service de données (12) interne au véhicule étant libéré pour l'au moins un terminal mobile (11) indépendamment du service de routage Internet (13).

2. Procédé selon la revendication 1, chaque terminal mobile (11) inscrit dans la fonction de blocage (25) restant également inscrit au-delà d'un redémarrage du véhicule automobile (10).

3. Procédé selon l'une des revendications précédentes, chaque terminal mobile (11) inscrit restant inscrit dans la fonction de blocage (25) jusqu'à ce qu'au niveau du dispositif de commande (26), la sélection de l'élément de sélection (27) associé au terminal mobile (11) respectivement inscrit soit annulée par une autre saisie d'utilisateur (28) et qu'ensuite l'inscription dans la fonction de blocage (25) soit supprimée.

4. Procédé selon l'une des revendications précédentes, la fonction de blocage (25) étant réalisée au moyen d'un pare-feu par à travers lequel est effectuée la transmission de données des données Internet (16).

5. Procédé selon l'une des revendications précédentes, l'au moins un service de données (12) interne au véhicule comprenant un service de diffusion continue pour des données multimédias et/ou une transmission de données entre au moins deux terminaux mobiles (11) et/ou une commande à distance d'au moins une fonction de véhicule (20) par un terminal mobile (11).

6. Procédé selon l'une des revendications précédentes, l'interface radioélectrique (19) étant fournie par un réseau WLAN.

7. Procédé selon l'une des revendications précédentes, le service de routage Internet (13) étant fourni au moyen d'un modem de radiocommunication mobile.

8. Procédé selon l'une des revendications précédentes, une liste (32) étant présente dans le service de routage Internet (13), dans laquelle sont énumérés les terminaux mobiles (11) pour lesquels le blocage (29) du service de routage Internet doit s'appliquer et, dans le cas où un tel terminal mobile (11) inscrit souhaite envoyer dans l'Internet (15) un paquet de données (33) qui est identifié avec l'adresse MAC, il est reconnu par la fonction de blocage (25) qu'il s'agit d'un paquet de données (33) d'un terminal mobile (11) pour lequel le service de routage Internet (13) est bloqué.

9. Véhicule automobile (10) comprenant un réseau de données (18), le véhicule automobile (10) étant conçu pour exploiter le réseau de données (18) conformément à un procédé selon l'une des revendications précédentes.
